# EUROPÄISCHE PATENTANMELDUNG

(11) **EP 1 158 232 A2**
(43) Veröffentlichungstag der Anmeldung: **28.11.2001**
(21) Anmeldenummer: 01111127.5
(22) Anmeldetag: 09.05.2001
(51) Int. Cl.: F16L 3/10

(54) **Schelle zur Befestigung von Schlauch- oder Rohrleitungen**

(30) Priorität: 11.05.2000 DE 10023126
(71) Anmelder: HYDAC Befestigungstechnik GmbH, 66125 Saarbrücken-Dudweiler (DE)
(72) Erfinder: Even, Rainer, Dipl.-Ing., 66123 Saarbrücken (DE)
(74) Vertreter: Patentanwälte Bartels und Partner

(57) **Zusammenfassung**

1. Schelle zur Befestigung von Schlauch- oder Rohrleitungen.
2. Die Erfindung betrifft eine Schelle zur Befestigung von Schlauch- oder Rohrleitungen, mit zwei Klemmteilen, von denen jedes einen gewölbten Backenteil (1) der mit dem Umfang der zu befestigenden Leitung zusammenwirkt, und einen flachen, sich vom Backenteil erstreckenden Befestigungsteil (3) aufweist, die zum Schließen der Schelle gegeneinander spannbar sind, wobei an einem Klemmteil mehrere aus der Ebene seines Befestigungsteiles (3) vorspringende Nasen (9) ausgebildet sind, die das betreffende Klemmteil mit einem die Schelle tragenden Träger (7) gegen Verdrehen sichert. Dadurch, daß das weitere Klemmteil gleichfalls mehrere aus der Ebene seines Befestigungsteils vorspringende Nasen (9) aufweist, daß die beiden Klemmteile als Gleichteile ausgebildet sind und daß die Nasen (9) unter Bildung der Verdrehsicherung den Träger (7) seitlich übergreifen, ist der Montageaufwand für die Schelle reduziert und dennoch ein sicheres Festlegen der jeweiligen Leitung zwischen den Klemmteilen an einem Träger sichergestellt.

## Beschreibung

Die Erfindung betrifft eine Schelle zur Befestigung von Schlauch- oder Rohrleitungen, mit zwei Klemmteilen, von denen jedes einen gewölbten Backenteil, der mit dem Umfang der zu befestigenden Leitung zusammenwirkt, und einen flachen, sich vom Backenteil erstreckenden Befestigungsteil aufweist, die zum Schließen der Schelle gegeneinander spannbar sind, wobei an einem Klemmteil mehrere aus der Ebene seines Befestigungsteiles vorspringende Nasen ausgebildet sind, die das betreffende Klemmteil mit einem die Schelle tragenden Träger gegen Verdrehen sichert.

Schellen dieser Art finden in der Technik für die Verankerung von Leitungen verschiedenster Art weit verbreitete Anwendung. Namentlich werden solche Schellen mit aus Stahlblech geformten Klemmteilen für die Befestigung von Hydraulikleitungen bei Baggern eingesetzt. Um die betriebssichere Verankerung der betreffenden Leitungen sicherzustellen, muß darauf geachtet werden, daß die Klemmteile an ihren Befestigungsteilen so miteinander verspannt werden, daß ein Verdrehen der Klemmteile relativ zueinander, was zu einer Schwenkbewegung der Backenteile gegenüber der Achse der aufgenommenen Leitung führen würde, sicher vermieden ist. Zu diesem Zweck sieht man üblicherweise mehr als eine Klemmschraube vor, die die Befestigungsteile der Klemmteile durchgreifen, um die Klemmteile gegeneinander zu spannen und gegebenenfalls die Schelle an einem Träger zu befestigen.

Durch die DE 33 12 865 A1 ist eine Schelle zum Befestigen eines Wellrohres bekannt. Bei dieser bekannten Schelle zum Befestigen eines Wellrohres mit einem das Wellrohr übergreifenden, zumindest über einen Teil eines Kreises gebogenen Abschnitt und wenigstens am einen Ende dieses Abschnitts einen etwa tangential zum Wellrohr nach außen abgewinkelten Abschnitt mit einem Loch zur Durchführung eines Befestigungsbolzens weist der das Wellrohr übergreifende Abschnitt der Schelle radial nach innen ragende, zwischen die Wellungen des Wellrohres einführbare Vorsprünge auf, um eine Axialverschiebung des Wellrohres relativ zur Schelle zu verhindern. Ferner weist der tangential zum Wellrohr abgewinkelte Abschnitt spitze Vorsprünge zur Drehsicherung der Schelle auf, in dem die Vorsprünge in der Art von Krampen in den Träger, an dem die Schelle festgelegt werden soll, eingreifen. Ferner weist die bekannte Schelle nur ein Klemmteil auf, so daß das Wellrohr auf einer Unterlage, beispielsweise in Form des Trägers selbst, zu sichern ist; andernfalls wäre nicht auszuschließen, daß das Wellrohr außer Eingriff mit dem gewölbten Backenteil des einzigen Schellenklemmteils gelangt. Des weiteren sind zum Herstellen der Krampenverbindung hohe Eingriffskräfte notwendig, die über eine Festlegeschraube für das einzige Klemmteil aufzubringen sind. Ferner setzt die Krampenverbindung über die spitzen Vorsprünge zur Drehsicherung der Schelle voraus, daß der Werkstoff des Trägers relativ weich, beispielsweise in Form eines Holzwerkstoffes, ausgebildet ist, um den dahingehenden Eingriff und das Festlegen überhaupt erst zu ermöglichen. Das sichere Festlegen der bekannten Schelle an Stahlträgerteilen od. dgl. ist mithin nicht möglich.

Ausgehend von diesem Stand der Technik liegt der Erfindung die Aufgabe zugrunde, die bekannten Schellenkonstruktionen derart weiter zu verbessern, daß sie kostengünstiger herstellbar sind, nichts desto weniger aber eine sichere Verankerung der betreffenden Leitung gewährleisten, sowie eine sichere Aufnahme dieser Leitungen innerhalb der Schelle. Eine dahingehende Aufgabe löst eine Schelle mit den Merkmalen des Patentanspruches 1 in seiner Gesamtheit.

Dadurch, daß gemäß dem kennzeichnenden Teil des Patentanspruches 1 das weitere Klemmteil gleichfalls mehrere aus der Ebene seines Befestigungsteiles vorspringende Nasen aufweist und daß die beiden Klemmteile als Gleichteile ausgebildet sind, lassen sich die Herstellkosten für die Schelle deutlich senken, da dem Grunde nach nur ein Gestehungswerkzeug oder ein Gestehungsvorgang notwendig ist, um die Schelle mit ihren beiden gleich aufgebauten Klemmteilen zu erhalten. Dergestalt läßt sich auch deutlich der Montageaufwand reduzieren, da der Monteur kaum darauf zu achten braucht, in welcher Reihenfolge er die Klemmteile an den Leitungen ansetzt, um diese dann an einem Träger festzulegen. Trotz der damit verbundenen Kostenersparnis erlauben die beiden, die Schelle bildenden Klemmteile ein sicheres Festlegen der jeweiligen Leitung in ihren einander zugewandten Backenteilen. Dadurch, daß gemäß dem weiteren kennzeichnenden Merkmal des Patentanspruches 1 die Nasen eines Klemmteils unter Bildung der Verdrehsicherung den Träger seitlich übergreifen, ist eine formschlüssige Verdrehsicherung erreicht, ohne daß mit hohen Einwirkungskräften krampenartige Vorsprünge in den Träger vorgetrieben werden müßten. Sofern der Träger also an die entsprechenden Geometrien der vorspringenden Nasen angepaßt ist, läßt sich mit geringem Kraftaufwand und zielgerichtet die Schelle über eine ihrer als Gleichteile ausgebildeten Klemmteile festlegen. Da die Nasen den Träger übergreifen, ist darüber hinaus sichergestellt, daß das flache, sich vom Backenteil weg erstreckende Befestigungsteil eines jeden Klemmteils in ebener Anlage mit der Oberseite des Trägers kommt, so daß eine paßgenaue Verbindung von Schelle mit Träger erreicht ist. Letzteres spielt insbesondere dann eine Rolle, wenn starre Leitungen mit mehreren derartigen Schellen über eine längere Wegstrecke an korrespondierenden Trägern festzulegen sind, wo Ungenauigkeiten den Leitungsverlauf beeinträchtigen könnten.

Die Befestigungsteile de Klemmteile werden mit nur einer einzigen Klemmschraube gespannt und derart am Träger festgelegt. Da nur eine einzige Schraube benötigt wird und in den Befestigungsteilen der Klemmteile nur eine einzige Bohrung ausgebildet werden muß, ergibt sich gleichfalls der Vorteil der verringerten Herstellungskosten, ohne daß eine Einbuße an Betriebssicherheit hingenommen werden müßte, weil die erforderliche Verdrehsicherheit durch die Formschlußverbindung mit dem Träger der Schelle über die Nasen gewährleistet ist.

Die die Verdrehsicherung bildende, aus der Ebene des betreffenden Befestigungsteils vorspringende Nase läßt sich auf einfache Weise durch Verformen einer vorzugsweise randseitig gelegenen Werkstoffpartie ausbilden, indem beispielsweise ein Prägevorgang durchgeführt wird. Bei Ausführungsbeispielen, bei denen der Befestigungsteil einen rechteckförmigen oder quadratischen Grundriß besitzt, ist vorzugsweise je eine an jedem Eckbereich ausgeformte Nase vorgesehen, so daß, wenn als Träger der Schelle ein passender quaderförmiger Montageklotz vorgesehen ist, dieser an zwei gegenüberliegenden Seiten durch je zwei Nasen des anliegenden Befestigungsteils übergriffen ist.

Nachstehend ist die Erfindung anhand von in der Zeichnung dargestellten Ausführungsbeispielen im einzelnen erläutert. Es zeigen:
- Fig. 1: eine Draufsicht eines Ausführungsbeispieles der erfindungsgemäßen Schelle;
- Fig. 2: eine Seitenansicht der auf einem Montageklotz befestigten Schelle von Fig. 1, teilweise geschnitten entsprechend der Linie II - II von Fig. 1;
- Fig. 3: eine Seitenansicht der Schelle von Fig. 1 und 2;
- Fig. 4: eine Draufsicht eines als Doppelschelle ausgebildeten Ausführungsbeispieles der erfindungsgemäßen Schelle;
- Fig. 5: eine Seitenansicht der Schelle von Fig. 4, teilweise geschnitten entsprechend der Linie V - V von Fig. 4;
- Fig. 6: einen Schnitt entsprechend der Linie VI - VI von Fig. 5.

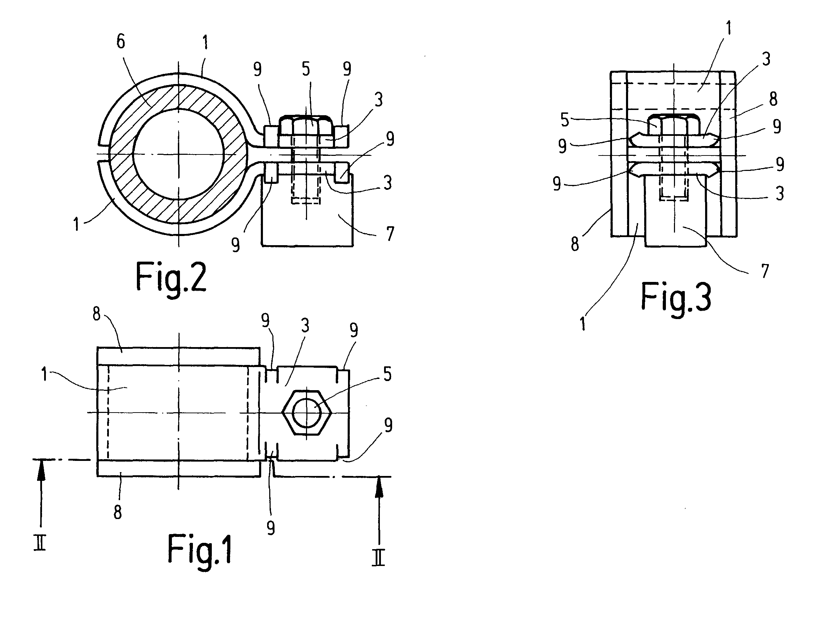

Fig. 1 bis 3 zeigen ein erstes Ausführungsbeispiel der erfindungsgemäßen Schelle in Form einer sogenannten Baggerschelle mit zwei gleich ausgebildeten Klemmteilen aus Stahlblech, die so geformt sind, daß sie jeweils einen gewölbten Backenteil 1 und einen flachen, sich vom Backenteil 1 weg erstreckenden Befestigungsteil 3 aufweisen. Die beim Ausführungsbeispiel im Grundriß quadratisch ausgebildeten, flachen Befestigungsteile 3 weisen eine zentral gelegene Bohrung auf, die von einer Klemmschraube 5 durchgriffen ist, durch die die Befestigungsteile 3 gegeneinander spannbar sind und die außerdem in eine Gewindebohrung eines Montageklotzes 7 eingreift, welcher den Träger für die Schelle bildet, an dem diese mittels der Klemmschraube 5 befestigt ist. Die derart aus Gleichteilen hergestellte Schelle läßt sich kostengünstig herstellen und montieren.

Die mittels der Schelle zu verankernde Leitung (nicht gezeigt), die zwischen den gewölbten Backenteilen 1 der Klemmteile aufgenommen ist, erstreckt sich beim in Fig. 1 bis 3 gezeigten Ausführungsbeispiel durch eine geteilte oder geschlitzte Muffe 6 aus einem elastomeren Werkstoff. Die Muffe 6 weist im Durchmesser vergrößerte seitliche Endränder 8 auf, die die Seitenränder der Backenteile 1 übergreifen und die Muffe 6 gegen Axialverschiebung an den Backenteilen 1 sichern.

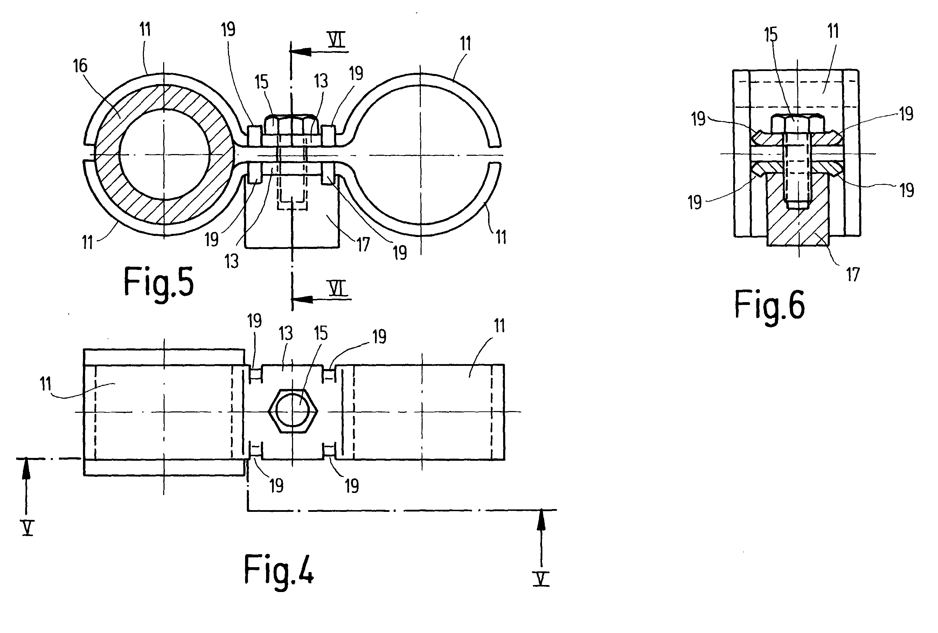

In den Eckbereichen jedes der flachen Befestigungsteile 3 ist je eine Nase 9 durch Verformen der betreffenden Werkstoffpartie ausgebildet, wobei die Nasen 9 jeweils in der Richtung des Anstieges der Wölbung des Backenteiles 1 aus der Ebene des Befestigungsteiles 3 vorspringen. Wie aus Fig. 2 und 3 zu ersehen ist, übergreifen die Nasen 9 den Montageklotz 7 an zwei zueinander entgegengesetzten Seiten, so daß die Schelle, wenn sie durch die Klemmschraube 5 zusammengespannt und mit dem Montageklotz 7 verschraubt ist, nicht nur am Montageklotz 7 abgestützt, sondern auch gegen Verdrehen gesichert ist.

Fig. 4 bis 6 zeigen die Ausbildung der Schelle als Doppelschelle, bei der die beiden Klemmteile jeweils zwei gewölbte Backenteile 11 aufweisen, die sich zu entgegengesetzten Seiten von dem flachen Befestigungsteil 13 erstrecken. Im übrigen ist die Doppelschelle gemäß Fig. 4 und 6 analog der in Fig. 1 bis 3 gezeigten Einzelschelle ausgebildet, d.h., die zu verankernde Leitung ist zwischen den Backenteilen 11 in einer elastomeren, geschlitzten oder geteilten Muffe 16 aufgenommen, die in Fig. 4 und 5 nur linksseitig gezeigt ist. Zum gegenseitigen Spannen der Klemmteile ist wiederum nur eine einzige Klemmschraube 15 vorgesehen, die den Zentralbereich der Befestigungsteile 13 durchgreift und in eine Gewindebohrung des Montageklotzes 17 eingeschraubt ist. Vorspringende Nasen 19 der Befestigungsteile 13 sind wiederum, entsprechend dem Beispiel von Fig. 1 und 3, so ausgebildet, daß der Montageklotz 17 beidseits von Nasen 19 übergriffen ist, so daß die Schelle wiederum an dem den Träger bildenden Montageklotz 17 sowohl abgestützt als auch gegen Verdrehen gesichert ist.

Beiden Lösungen gemeinsam ist es, daß durch den Übergriff der Nasen 9,19 am Träger 7,17 das jeweilige Befestigungsteil 3,13, das am Träger 7,17 in der Befestigungsstellung aufliegt, in ebener Anlage mit dessen Oberseite ist. Somit kommt es dann aber auch über die Schraubverbindung 5,15 zu einer genauen, exakten Ausrichtung des jeweils darüber angeordneten Klemmteils. Aufgrund der redundanten Anordnung der Nasen 9,19 an den Klemmteilen paßt jedenfalls immer ein Klemmteil genau auf den zugeordneten Träger 7,17. Sollte durch Fertigungsungenauigkeiten einmal eine Nase 9,19 an einem Klemmteil nicht ausgebildet sein, ist es aufgrund der redundanten Anordnung dann möglich, daß das jeweils andere Klemmteil die Festlegefunktion am Träger als Verdrehsicherung übernehmen kann.

## Patentansprüche

1. Schelle zur Befestigung von Schlauch- oder Rohrleitungen, mit zwei Klemmteilen, von denen jedes einen gewölbten Backenteil (1;11) der mit dem Umfang der zu befestigenden Leitung zusammenwirkt, und einen flachen, sich vom Backenteil erstreckenden Befestigungsteil (3;13) aufweist, die zum Schließen der Schelle gegeneinander spannbar sind, wobei an einem Klemmteil mehrere aus der Ebene seines Befestigungsteiles (3;13) vorspringende Nasen (9;19) ausgebildet sind, die das betreffende Klemmteil mit einem die Schelle tragenden Träger (7;17) gegen Verdrehen sichert, **dadurch gekennzeichnet, daß** das weitere Klemmteil gleichfalls mehrere aus der Ebene seines Befestigungsteils vorspringende Nasen (9;19) aufweist, daß die beiden Klemmteile als Gleichteile ausgebildet sind und daß die Nasen (9;19) unter Bildung der Verdrehsicherung den Träger (7;17) seitlich übergreifen.

2. Schelle nach Anspruch 1, **dadurch gekennzeichnet, daß** die jeweils vorspringende Nase (9;19) durch eine Verformung des betreffenden Befestigungsteiles (3;13) gebildet ist.

3. Schelle nach Anspruch 2, **dadurch gekennzeichnet, daß** der Befestigungsteil (3;13) einen rechteckförmigen oder quadratischen Grundriß mit je einer an jedem Eckbereich ausgeformten Nase (9;19) aufweist und daß als Träger der Schelle ein quaderförmiger Montageklotz (7;17) vorgesehen ist, der an zwei gegenüberliegenden Seiten durch je zwei Nasen (9;19) des anliegenden Befestigungsteiles (3; 13) übergriffen ist.

4. Schelle nach Anspruch 3, **dadurch gekennzeichnet, daß** die Befestigungsteile (3;13) durch eine im Zentralbereich zwischen den Nasen (9;19) angeordnete, beide Befestigungsteile durchgreifende Klemmschraube (5;15) am Montageklotz (7;17) sicherbar sind.

5. Schelle nach einem der Ansprüche 1 bis 4, **dadurch gekennzeichnet, daß** sie als Doppelschelle ausgebildet ist, bei der jeder Klemmteil zwei gleich ausgebildete Backenteile (11) aufweist, die sich auf zueinander entgegengesetzten Seiten vom betreffenden Befestigungsteil (13) weg erstrecken.
